# EUROPEAN PATENT APPLICATION

(11) **EP 1 227 314 A2**
(43) Date of publication of application: **31.07.2002**
(21) Application number: 02002191.1
(22) Date of filing: 29.01.2002
(51) Int. Cl.: G01N 21/88, G01N 21/89

(54) **Light source for inspection of planographic printing plate and inspection system using the same**

(30) Priority: 29.01.2001 JP 2001019780; 10.09.2001 JP 2001273045
(71) Applicant: FUJI PHOTO FILM CO., LTD., Kanagawa 250-01 (JP)
(72) Inventor: Ariga, Osamu, Yoshida-cho, Haibara-gun, Shizuoka-ken (JP)
(74) Representative: Grünecker, Kinkeldey, Stockmair & Schwanhäusser Anwaltssozietät

(57) **Abstract**

A light source to be used for detecting defect portions of a printing plate. The light source features: a lamp for irradiating light; a flexible member for light transmission, one end of which is optically connected to the lamp; an optical member which is optically connected to the other end of the flexible member and is disposed along a widthwise direction of the printing plate; a lens which collects and irradiates the light from the optical member onto the printing plate; and a diaphragm which, directly or indirectly, controls the amount of the light that is irradiated onto the printing plate.

## Description

### BACKGROUND OF THE INVENTION

### Field of the Invention

The present invention relates to a light source for irradiating an inspection light to a planographic printing plate and to an inspection system for detection of defective plate portions using the light source.

### Description of the Related Art

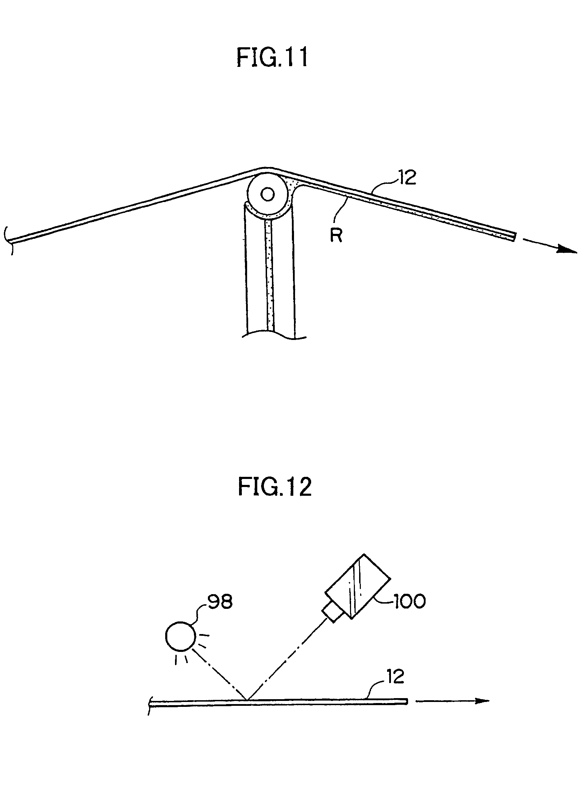

Conventionally, a photosensitive planographic printing plate (hereinafter referred to simply as a PS plate) is manufactured by applying surface treatments such as graining, anodic oxidation, a silicate treatment, and other chemical conversion treatments, solely or in combination with each other, to an aluminum web in elongated sheet form or roll form, and then subjecting the web to coating with a light-sensitive solution so as to have a photosensitive layer formed thereon, as shown in Fig. 11. Thereafter, the production process is completed by cutting the web into sheets of a predetermined size.

Prior to this cutting process, an optical inspection apparatus inspects the photosensitive layer of the PS plate for defective portions, such as streaks, scratches, uneven coating, dust and the like. To identify locations of the defective portions on the PS plate, labels are put on an edge of the PS plate. Thereafter, sheet pieces each having a predetermined length are cut off from the PS plate. Among the sheet pieces, ones having the labels thereon are rejected as inferior goods.

There has been known a conventional inspection apparatus, as shown in Fig. 12, in which a light beam from a light source 98 is regularly (specularly) reflected from the PS plate and is focused or received in a camera 100, in order to detect such defective portions.

To improve detection performance, it is necessary to use planographic printing plates of low reflectivity and to use a light having sufficient luminous flux density and a uniform light intensity along a widthwise direction of the PS plate. If the printing plate is to be conveyed at a high speed, then a light having a higher luminous flux density is necessary.

In a conventional apparatus, such as that shown in Fig. 11, in which application of a coating agent R to a PS plate 12 is carried out by using a bar, if the bar has scratches, debris, or the like on the periphery thereof, there is a high possibility that scratches (abrasions) will be generated at the surface of the PS plate to which the coating agent is being applied. To detect such scratches of the PS plate, there has been used a system in which a light beam from the light source 98 is regularly reflected from the PS plate 12 and is focused or received in the camera 100, as shown in Fig. 12. In this system, a noise signal is always detected, and the peak height of a signal part indicative of a defect (hereinafter referred to as a defect signal part) is at almost the same level as the peak height of other signal parts, i.e., the defect signal part does not stand out from the noise signal. For that reason, it is difficult to detect when a defect signal part is present. As a consequence, inspection has had to rely on visual examinations.

At present, there is no automatic inspection system capable of detecting all the kinds of defective portions which can be generated on printing plates, such as color streaks, scratches, coating unevenness, dust and the like.

### SUMMARY OF THE INVENTION

In light of the above-mentioned situation, a primary object of the present invention is to provide a light source for inspection and an inspection system which are free of the aforementioned conventional drawbacks.

To achieve this object, according to one aspect of the present invention, there is provided a light source usable for detecting defect portions of a planographic printing plate, the light source including: (a) a lamp for irradiating light; (b) a flexible member for light transmission having two ends, one of which is optically connected to the lamp; (c) an optical member which is optically connected to the other end of the flexible member and disposed along a widthwise direction of the printing plate; (d) a lens disposed to receive the light from the optical member, for condensing the light and irradiating the light onto the printing plate; (e) a diaphragm disposed on the path of the light for directly or indirectly controlling an amount of light irradiated onto the printing plate.

If the diaphragm is provided between the lens and the printing plate, then the diaphragm can directly control the amount of light irradiated onto the printing plate. Alternatively, the diaphragm can be provided upstream of the lens on the path of the light and control the amount of light irradiated onto the printing plate indirectly.

In accordance with another aspect of the present invention, there is provided a detection apparatus for detecting defect portions of a planographic printing plate, the apparatus including: (A) a light source for irradiating inspection light onto the printing plate; (B) a polarizing filter disposed to receive inspection light that has been regularly reflected from the printing plate, which transmits substantially only a transverse wave component of the received inspection light; and (C) an image pickup element disposed to receive inspection light that has passed through the polarizing filter.

Moreover, in accordance with a further aspect of the present invention, there is provided a detection system for detecting defect portions of a planographic printing plate, the system including: (A) a light source apparatus for irradiating inspection light onto the printing plate; (B) a first CCD camera apparatus disposed to receive diffusively reflected light from the printing plate; (C) a second CCD camera apparatus disposed to receive regularly reflected light from the printing plate; (D) a third CCD camera apparatus disposed to receive regularly reflected light from the printing plate; (E) a fourth CCD camera apparatus disposed to receive diffusively reflected light from the printing plate; (F) a detector which processes detection signals outputted from the first to fourth CCD camera apparatuses, detects when a processed signal exceeds a predetermined threshold level and, in response thereto, determines a defect location on the printing plate.

The foregoing and other objects, features and advantages of the present invention will be apparent from the following description of a preferred embodiment of the invention, as illustrated in the accompanying drawings.

### BRIEF DESCRIPTION OF THE DRAWINGS

Fig. 1 is a schematic view showing a PS plate inspection system according to an embodiment of the present invention.
Fig. 2 is a block diagram showing the PS plate inspection system according to the embodiment.
Fig. 3 is a cross-sectional view showing an irradiation section of a light source for inspection of a PS plate according to the embodiment.
Fig. 4 is a cross-sectional view showing the light source according to the embodiment.
Figs. 5A and 5B are front views showing a mechanical shutter of the light source according to the embodiment.
Fig. 6 is a table showing characteristics of CCD cameras of the PS plate inspection system according to the embodiment.
Fig. 7 is a perspective view showing an arrangement of the light source and a first group of CCD cameras.
Fig. 8 is an explanatory diagram showing a CCD linear sensor incorporated in the first group of CCD cameras.
Fig. 9 is a block diagram showing data processing and automatic light-control processing of the PS plate inspection system according to the embodiment.
Fig. 10 is an explanatory diagram showing a CCD linear sensor incorporated in a third group of CCD cameras.
Fig. 11 is a side view showing a web on which a photosensitive layer is being applied by a bar.
Fig. 12 is a side view showing a prior art PS plate inspection apparatus.

### DESCRIPTION OF THE PREFERRED EMBODIMENT

Referring now to the accompanying drawings, an embodiment of the present invention will be described below.

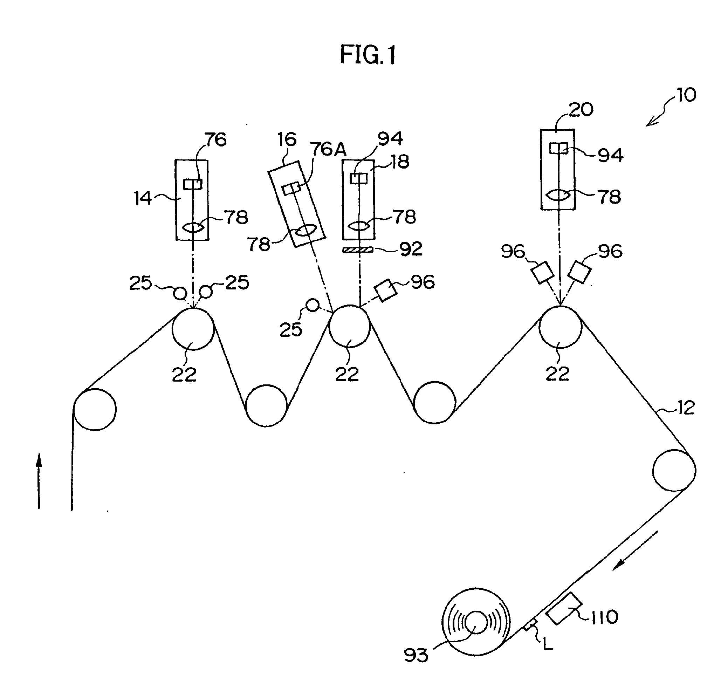

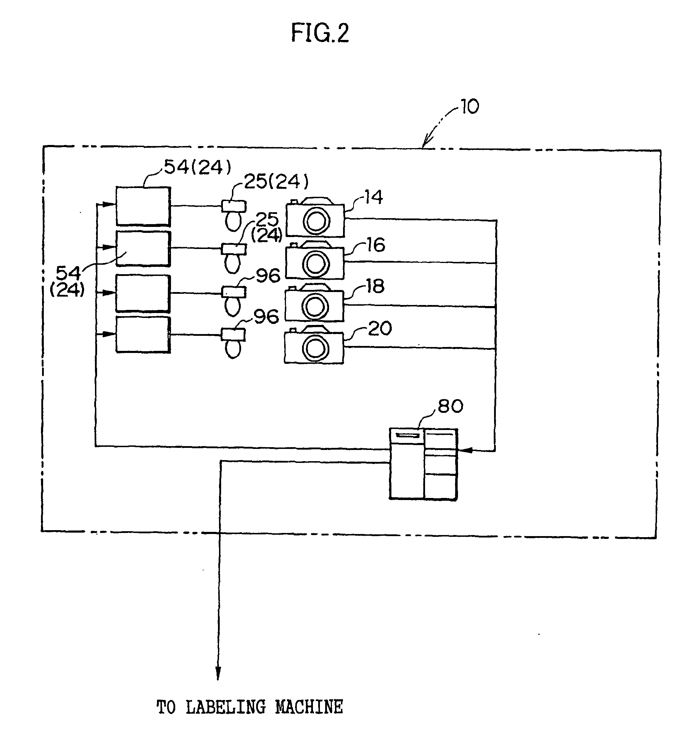

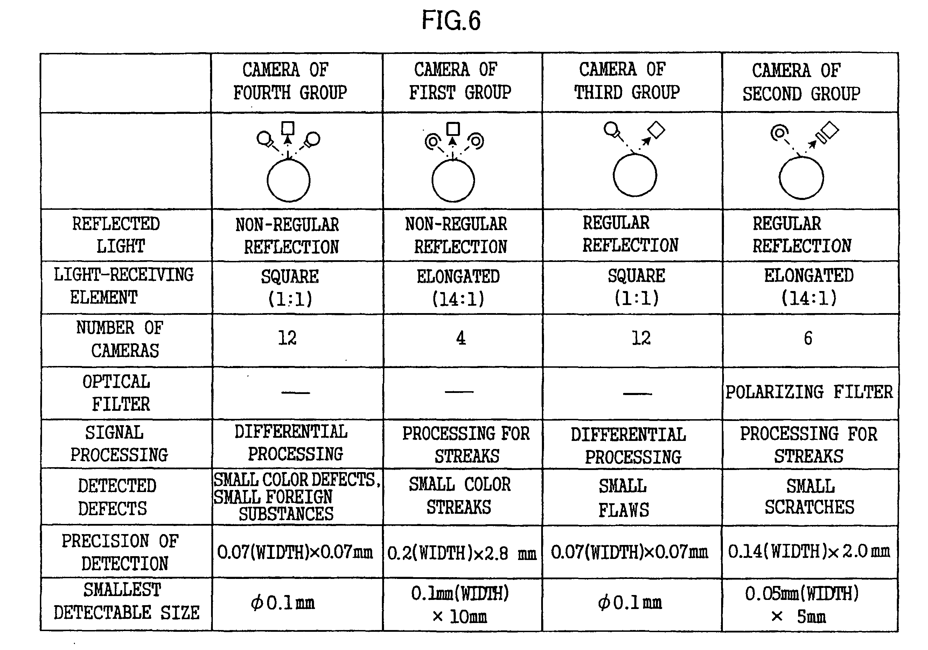

As shown in Figs. 1 and 2, an inspection system 10 for inspection of a PS plate according to the present embodiment has a predetermined number of groups of CCD cameras. In the present embodiment, there are four groups, i.e., a first group of CCD cameras 20, a second group of CCD cameras 18, a third group of CCD cameras 16, and a fourth group of CCD cameras 14, disposed in that order from a downstream side in a direction opposite to a conveyance direction of the PS plate 12. This number may be changed in accordance with visual field requirements, as shown in Fig. 6.

At each group, the CCD cameras of the group are disposed in a line along a widthwise direction of the PS plate 12 and disposed facing an inspection roller 22 so as to pick up an image of the PS plate 12, which is wound around the respective inspection rollers 22.

The distance between each CCD camera and the PS plate 12 is kept constant such that once the camera has been adjusted to be in focus, there is no need for subsequent focus adjustment.

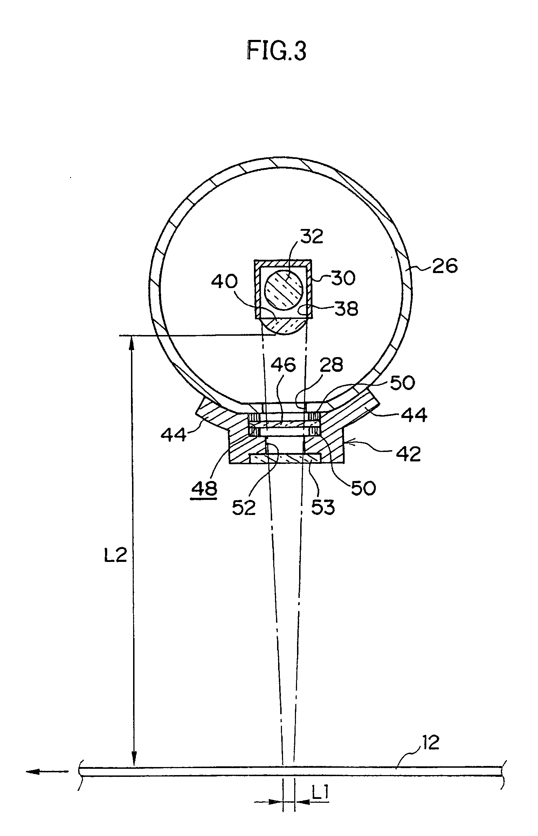

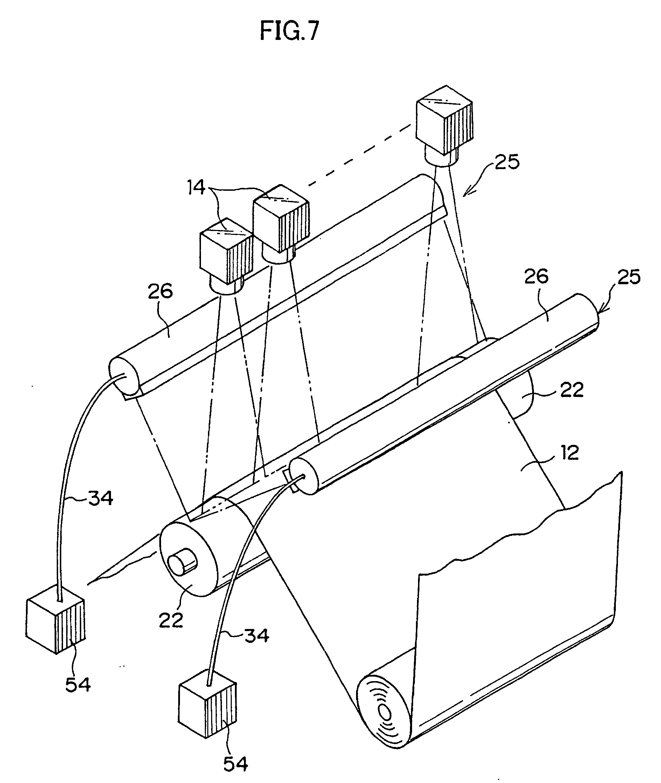

An irradiation unit 25 of an inspection light source 24 illuminates a region of the PS plate 12, of which the fourth group of CCD cameras 14 picks up an image. As shown in Figs. 3 and 7, the irradiation unit 25 is provided with a substantially cylindrical protection pipe 26 made of aluminum, which is disposed along a longitudinal direction substantially parallel to the inspection roller 22. Inside the protection pipe 26 is incorporated a rod cover 30 which has an opening 38 extending therealong and both ends of which are fixedly secured to the ends of the protection pipe 26.

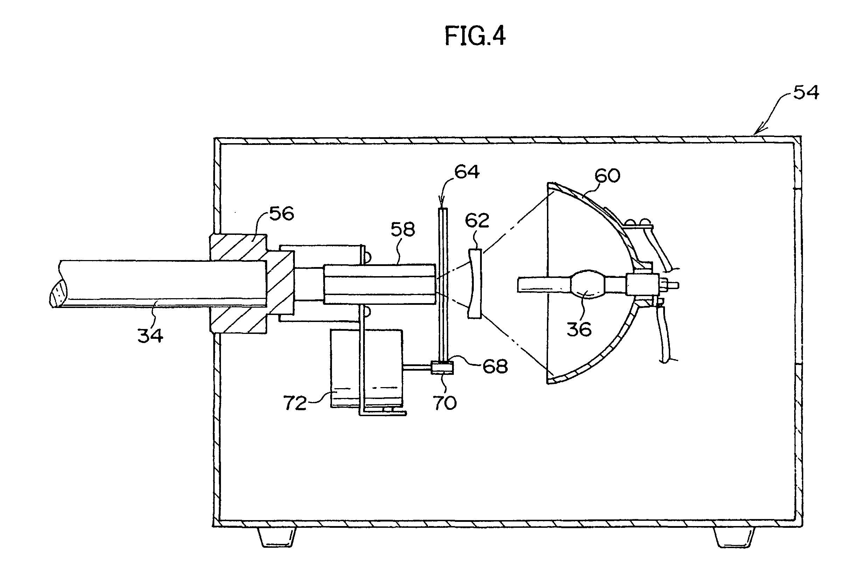

Into the rod cover 30 is inserted a quartz rod 32 whose end is connected to an optical fiber cable 34. Light from a metal halide lamp 36 (as shown in Fig. 4 and described below) is irradiated through the opening 38 of the rod cover 30 towards the PS plate 12.

As shown in Fig. 3, a cylindrical lens 40 made of acrylic is attached onto the opening 38. The cylindrical lens 40 is approximately 10 mm in width and has a curved face with a radius of 10 mm. An illumination distance L2 therefrom to the PS plate 12 is set such that an illumination point is located at an appropriate position short of the focal point (L2 = 50 mm, beam width L1 = 4 mm), so as to improve luminous flux density and to maintain uniformity of quantities of linear light along the widthwise direction of the PS plate 12.

The protection pipe 26 has a light projection opening 28 formed along a longitudinal direction thereof, through which a light beam which has been condensed by the cylindrical lens 40 passes. The PS plate 12 is illuminated by the light beam. Further, a guard cover 42 is attached to the light projection opening 28 side of the protection pipe 26, along the longitudinal direction thereof.

The guard cover 42 is provided with flanges 44 which extend in opposite directions from opposite sides thereof. A portion enclosed by the guard cover 42 and the flanges 44 functions as a holding portion 48, which holds an acrylic color filter 46. Because, due to use of this color filter 46, yellow inspection light (wavelength: 470 nm to 770 nm) is applied, exposure of a photosensitive layer of the PS plate is prevented. By using a filter having a color such as orange to properly define a wavelength range to be cut out, exposure can be more reliably prevented and the intensity of illumination can be altered.

The color filter 46 is sandwiched between pieces of velvet 50 at both ends in a widthwise direction. Due to the velvet pieces sandwiching the color filter 46, leakage through a clearance gap of white light that has not passed through the color filter 46 is effectively prevented, and the PS plate 12 will not be fogged. Also, ingression through crevices of dust and dirt and adhesion thereof to the cylindrical lens 40 is prevented.

Because the velvet pieces 50 are resilient, the color filter 46 can be easily removed and installed for replacement when it is faded. Thus, work efficiency can be improved.

A through-opening 52 is formed at a bottom side of the holding portion 48. An outer surface of the through-opening 52 has a frame portion, into which a transparent tempered glass is fitted. Thus, dust adhesion to the color filter 46 can be prevented.

As shown in Fig. 4, a light source apparatus 54, into which the metal halide lamp 36 is built, is provided with a cylindrical connection portion 56 which is optically coupled to an optical fiber cable 34. A hexagonal rod lens 58 is disposed coaxially with the connection portion 56. Light emitted from the metal halide lamp 36 is concentrated by a dish-shaped reflecting mirror 60 and a collecting lens 62, and is then inputted into the hexagonal rod lens 58. Hence, the light is stably and evenly transmitted through the optical fiber cable 34 to the quartz rod 32.

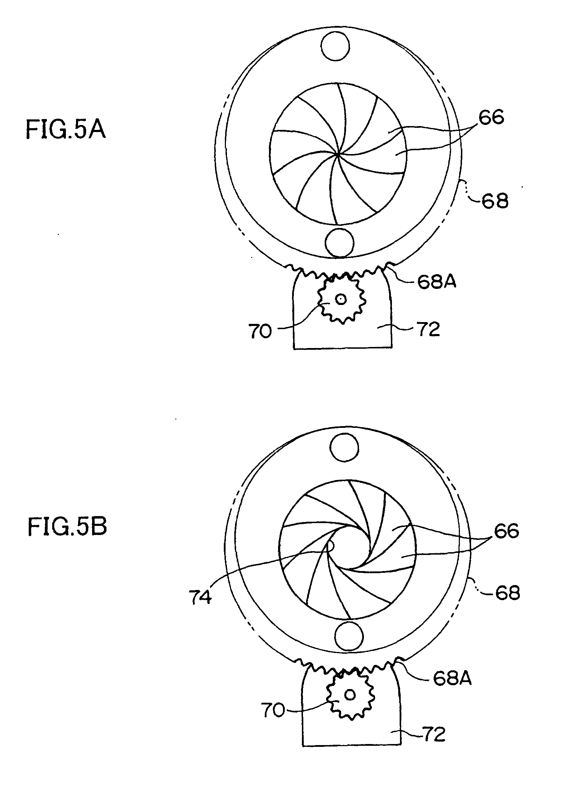

Between the hexagonal rod lens 58 and the collecting lens 62 is provided a mechanical shutter 64, which controls amounts of light entering the hexagonal rod lens 58. As shown in Figs. 5A and 5B, the mechanical shutter 64, which includes a plurality of blade-like iris members 66, has an opening whose diameter can be continuously altered by a pulse motor 72 rotating a gear 70 which meshes with a gear portion formed on the periphery of a ring 68. The pulse motor 72 is inputted with pulse signals based on an amount of light received at the fourth group of CCD cameras 14. In this way, as an aperture can be adjusted by the iris members 66, automatic light regulation at the light source side is accomplished such that output amounts of light emitted from the quartz rod 32 are constant.

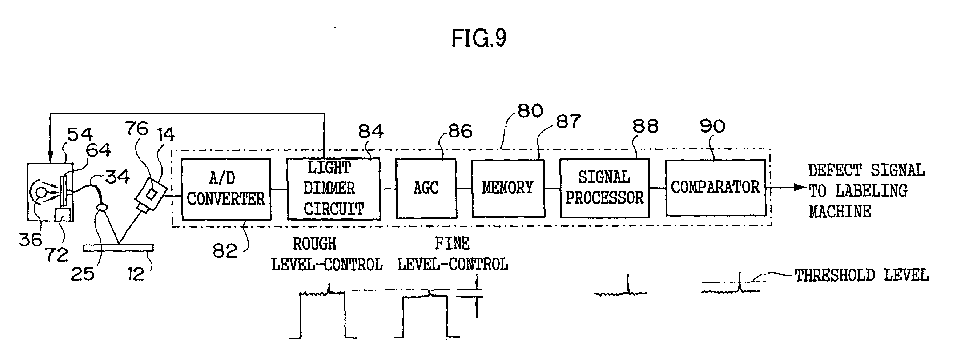

As shown in Fig. 1, a labeling machine 110 is disposed at a downstream side of the first group of CCD cameras 20, which are disposed furthest downstream of the groups of CCD cameras. This labeling machine 110 puts a label L on an edge of the PS plate 12 a predetermined amount of time after a defect signal has been output from a comparator 90 (see Fig. 9). Further downstream, sheets of PS plate are cut off from the PS plate. Among these sheets, any sheet having a label L applied thereto is detected due to the presence of the label and is rejected as being inferior. The labels L may have detection information printed thereon.

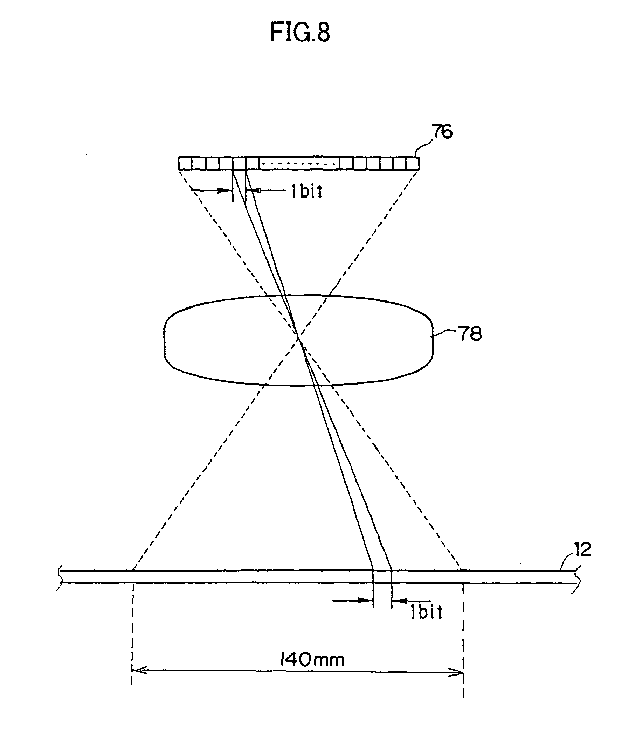

As shown in Figs. 1 and 8, each of the fourth group of CCD cameras 14 is equipped with a CCD linear sensor 76, and an image-formation lens 78 by which diffused reflection light from the PS plate 12, which is irradiated from the right and left by the light irradiation units 25 is focused onto the CCD linear sensor.

The CCD linear sensor 76 has 2,000 light-receiving elements arranged in a line along a widthwise direction orthogonal to a conveyance direction of the PS plate. Each of the light-receiving elements is elongated along the conveyance direction and has a substantially square.

Each of the fourth group of CCD cameras 14 has a sensing range (field of view) of 140 mm. Width resolution (precision of detection) is 0.07 mm (140 mm/2,000 bits = 0.07 mm).

The fourth group of CCD cameras 14 have a visual field of 140 mm each and these twelve cameras can cover a range of approximately 1,600 mm. The CCD linear sensors 76 are arranged in a line along the widthwise direction of the PS plate 12 such that adjacent sensing fields of the CCD linear sensors 76 overlap with one another by approximately 5 mm. Accordingly, in signal processing, duplicate image signals corresponding to such edge portions are cancelled.

Each of the fourth group of CCD cameras 14 detects quantities of reflected light at fixed intervals of time. The interval may be, for example, an accumulation time unit during which incident light passes through an opening window and is converted to signal charge over 0.1 seconds, and is then stored as accumulated charge data. By shortening this period or cycle, it is possible to further minimize the smallest detectable size, for a case of high speed conveyance.

Next, description will be given of a process flow in which defect portions of the PS plate are detected due to automatic regulation of reflected light from the PS plate.

As shown in Fig. 9, a signal outputted by the CCD linear sensor 76 of the fourth group of CCD cameras 14 is inputted into an A/D converter 82 of a control board 80, where the signal is converted to a digital signal, which is then inputted into a light dimmer circuit 84. The light dimmer circuit 84 outputs pulse signals to the pulse motor 72 to drive opening and closing motions of the mechanical shutter 64, for light regulation such that the light intensity of incident light into the CCD linear sensor 76 has a predetermined level.

Due to the high intensity of illumination of the metal halide lamp 36 and due to the inspection light source 24 enabling automatic light regulation so as to compensate for a deterioration of illumination of the metal halide lamp 36, it is possible to inspect for defective PS plate potions at optimum conditions, with an output light from the metal halide lamp 36 of sufficient intensity of illumination. Therefore, a cycle of lamp replacement for the light source becomes long, and costs therefor can be reduced. Moreover, because the cylindrical lens for collecting light is made of acrylic, it is possible to manufacture a long cylindrical lens having a small lens diameter. If the collecting lens was composed of short cylindrical glass lenses linked one another in a row, the linkage portions would cause uneven illumination. However, the present embodiment does not have this drawback.

In the light dimmer circuit 84, the inspection signal is roughly level-controlled, and then inputted to an auto-gain-controller (AGC) 86, where the level-controlled signal is regulated (precisely level-controlled), and is then stored in a memory 87. In a signal processor 88, differential processing is carried out on the stored signal to convert it to a differential signal.

The signal processed in the signal processor 88 and a threshold level are input to a comparator 90. The comparator 90 outputs a defect signal when the value of the processed signal exceeds the threshold level.

The fourth group of CCD cameras 14 is responsible for detecting small color defects and/or foreign substances. Precision of detection thereof is 0.07 mm (width) × 0.07 mm (length). The smallest detectable size has a diameter of 0.1 mm.

As described above, in response to a defect signal being output from the comparator 90, after a predetermined time the labeling machine 110 operates and puts the label L on the edge of the PS plate 12. After this labeling process, the PS plate is wound around a roll 92 and then conveyed to a subsequent cutting process.

As shown in Fig. 1, light that has been irradiated by the light irradiation unit 25 is regularly (specularly) reflected from the PS plate 12 and then enters CCD linear sensors 76A of the third group of CCD cameras 16. Each sensor 76A has 2,000 light-receiving elements arranged in a line along the widthwise direction orthogonal to the conveyance direction. Each of the light-receiving elements has the same square shape as those in the fourth group of CCD cameras 14.

Each of the third group of CCD cameras 16 is responsible for detecting small flaws. Precision of detection is 0.07 mm (width) × 0.07 mm (length). The smallest detectable size of a defect portion is diameter 0.1 mm.

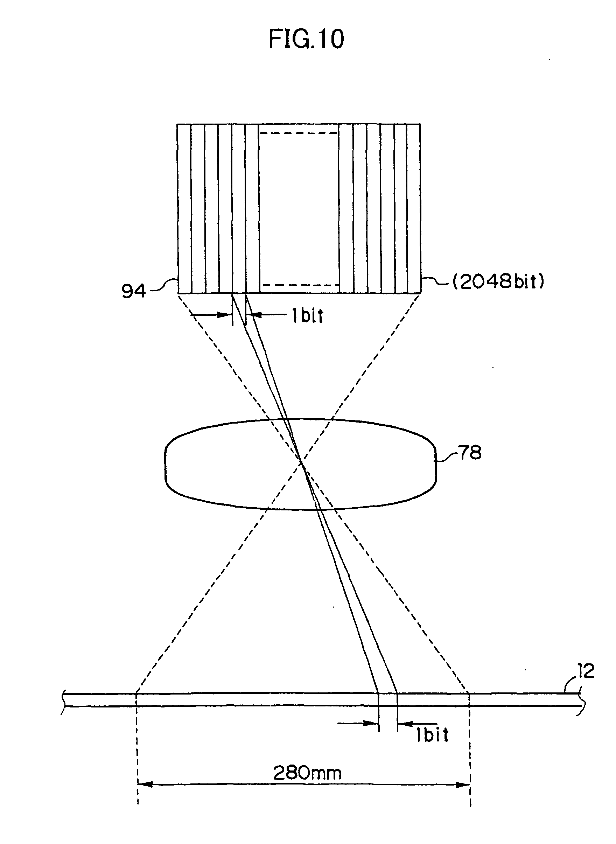

As shown in Figs. 1 and 10, each of the second group of CCD cameras 18 includes a CCD linear sensor 94 composed of square-shaped light-receiving elements which are arranged along the PS plate widthwise direction and each of which is elongated along the conveyance direction in a rectangular shape with a 1 to 14 dimension ratio. The PS plate 12 is irradiated by a fluorescent lamp 96. A beam of inspection light that has been regularly reflected from the PS plate 12 enters the CCD linear sensor 94.

As shown in Figs. 1 and 6, according to the inspection system of the present embodiment, in front of each of the second group of CCD cameras 18 is disposed a polarizing filter 92 which cuts latitudinal (horizontally-polarized) waves from a beam of inspection light (from the fluorescent lamp 96) )that has been regularly reflected from the photosensitive layer of the PS plate 12, and enables only transverse (vertically-polarized) waves to enter the CCD linear sensor 94. In this way, by using inspection light from which latitudinal wave components have been cut out, it is possible to decrease levels of fluctuation in reflected light intensity generated from a normal surface portion free of surface defects such as bar flaw scratches and the like (a general noise component), and to increase proportional levels of fluctuation in reflected light intensity generated at surface portions with such surface defects (a defect component). Namely, it is possible to prevent fluctuations in the reflected light intensity generated at normal, defect-free surface portions of the PS plate from being detected as signals indicating defects.

This CCD linear sensor 94 outputs a signal which is in turn inputted into a signal processor 88. In the signal processor 88, the stored signals are processed such that a level fluctuation in noise intensity originating from a defective surface portion of the PS plate can be emphasized. More specifically, certain processings, such as adjacent correlation processing or integration processing, are carried out on the digital signals in the signal processor, and thus levels of fluctuation in noise intensity originating from non-defect surface portions of the PS plate can be minimized while levels of fluctuation in noise intensity caused by defect surface portions of the PS plate can be emphasized. Defect surface portions that feature continuous defects of at least a predetermined length are most strongly emphasized.

The signal processed in the signal processor 88, and a threshold level corresponding to a predetermined level of the processed signal indicative of a defective PS plate portion, are inputted to a comparator circuit. The comparator circuit outputs a defect signal when the value of the processed signal exceeds the threshold level.

Each of the second group of CCD cameras 18 is responsible for detecting small scratches. Precision of detection is 0.14 mm (width) × 2.0 mm (length). The smallest detectable size of a defect portion is 0.05 mm (width) × 5 mm (length).

Lastly, each of the first group of CCD cameras 20 includes a CCD linear sensor 94 composed of light-receiving elements which are arranged along the PS plate widthwise direction and each of which has a rectangular shape with a 1 to 14 dimension ratio, similarly to the second group of CCD cameras 18. The PS plate 12 is irradiated from left and right sides by the fluorescent lamps 96. A beam of inspection light that has been diffusely reflected from the PS plate 12 is focused and received in the CCD linear sensor 94.

Each of the first group of CCD cameras 20 is responsible for detecting small color streaks. Precision of detection is 0.2 mm (width) × 2.8 mm (length). The smallest detectable size of a defect portion is 0.1 mm (width) × 10 mm (length).

## Claims

1. A light source usable for detecting defect portions of a planographic printing plate, the light source comprising:
(a) a lamp for irradiating light;
(b) a flexible member for light transmission having two ends, one of which is optically connected to the lamp;
(c) an optical member which is optically connected to the other end of the flexible member and disposed along a widthwise direction of the printing plate;
(d) a lens disposed to receive the light from the optical member, for condensing the light and irradiating the light onto the printing plate; and
(e) a diaphragm disposed on the path of the light for directly or indirectly controlling an amount of light irradiated onto the printing plate.

2. The light source of claim 1, wherein the lamp comprises a metal halide lamp.

3. The light source of claim 1, wherein the flexible member comprises an optical fiber cable.

4. The light source of claim 1, wherein the optical member comprises a quartz rod.

5. The light source of claim 1, wherein the lens comprises a cylindrical lens made of acrylic.

6. The light source of claim 1, wherein the diaphragm is disposed between the lamp and the flexible member.

7. The light source of claim 1, wherein the diaphragm comprises a mechanical iris diaphragm.

8. The light source of claim 1, further comprising a condenser which is disposed between the lamp and the iris diaphragm.

9. A detection apparatus for detecting defect portions of a planographic printing plate, the apparatus comprising:
(A) a light source for irradiating inspection light onto the printing plate;
(B) a polarizing filter disposed to receive inspection light that has been regularly reflected from the printing plate, which transmits substantially only a transverse wave component of the received inspection light; and
(C) an image pickup element disposed to receive inspection light that has passed through the polarizing filter.

10. The apparatus of claim 9, further comprising a unit for controlling an amount of the light from the light source that is irradiated onto the printing plate.

11. The apparatus of claim 9, further comprising a processor connected to the image pickup element, which digitizes and stores a detection signal outputted from the image pickup element.

12. The apparatus of claim 11, wherein the processor carries out signal processing so as to relatively amplify continuous defect signals.

13. The apparatus of claim 12, wherein the processor detects when the processed signal exceeds a predetermined threshold level and, in response thereto, identifies a defect location on the printing plate.

14. The apparatus of claim 13, further comprising an applicator disposed at the printing plate downstream from an inspection light position, which applies a visible mark at the identified defect location.

15. The apparatus of claim 14, wherein the applicator comprises a labelling machine

16. The apparatus of claim 9, wherein the image pickup element comprises a plurality of CCD cameras, each of which has a CCD sensor incorporated therein.

17. The apparatus of claim 16, wherein the CCD sensors are arranged in a line along a direction orthogonal to a conveyance direction of the printing plate.

18. The apparatus of claim 17, wherein at least one of the CCD linear sensors comprises a plurality of square-shaped elements.

19. A detection system for detecting defect portions of a planographic printing plate, the system comprising:
(A) a light source apparatus for irradiating inspection light onto the printing plate;
(B) a first CCD camera apparatus disposed to receive diffusively reflected light from the printing plate;
(C) a second CCD camera apparatus disposed to receive regularly reflected light from the printing plate;
(D) a third CCD camera apparatus disposed to receive regularly reflected light from the printing plate;
(E) a fourth CCD camera apparatus disposed to receive diffusively reflected light from the printing plate; and
(F) a detector which processes detection signals outputted from the first to fourth CCD camera apparatuses, detects when a processed signal exceeds a predetermined threshold level and, in response thereto, determines a defect location on the printing plate.

20. The detection system of claim 19, wherein the second CCD camera apparatus comprises a polarizing filter disposed to receive inspection light that has been regularly reflected from the printing plate, the polarizing filter transmitting substantially only a transverse wave component of the received inspection light.
